# EUROPÄISCHE PATENTSCHRIFT

(11) **EP 3 482 935 B1**
(45) Veröffentlichungstag und Bekanntmachung des Hinweises auf die Patenterteilung: **13.07.2022**
(21) Anmeldenummer: 17201060.5
(22) Anmeldetag: 10.11.2017
(51) Int. Cl.: B33Y 30/00, B33Y 40/00, B29C 64/214, B29C 64/209, B29C 64/30, B29C 64/245, B29C 64/227

(54) **SIEBEINHEIT FÜR EINE DRUCKVORRICHTUNG**
SCREEN UNIT FOR A PRINTING DEVICE
UNITÉ DE TAMISAGE POUR UN DISPOSITIF D'IMPRESSION

(43) Veröffentlichungstag der Anmeldung: 15.05.2019
(73) Patentinhaber: Exentis Group AG, 5608 Stetten (AG) (CH); EKRA Automatisierungssysteme GmbH, 74357 Bönnigheim (DE)
(72) Erfinder: Plachy, Franz, 74336 Brackenheim (DE); Reinisch, Hubert, 71691 Freiberg am Neckar (DE); Vasic, Srdan, 8810 Horgen (CH); Engel, Markus, 84416 Moosen/Vils (DE)
(74) Vertreter: Clarenbach, Carl-Philipp

(56) Entgegenhaltungen:
- EP-A1- 0 270 485
- EP-A1- 2 305 467
- WO-A1-2016/095059
- DE-A1- 4 226 502
- DE-A1- 10 344 022
- DE-A1- 19 936 572
- US-A1- 2015 328 838

## Beschreibung

Die Erfindung betrifft eine Siebeinheit für eine Druckvorrichtung, insbesondere 3D-Siebdruckvorrichtung, zum Drucken dreidimensional geformter Strukturen, insbesondere auf Substraten, insbesondere Leiterplatten, Wafer, Solarzellen, Trägersubstraten, Drucktischen, Trägerplatten, Sinterplatten oder dergleichen, wobei die Siebeinheit einen zumindest ein Drucksieb tragenden Rahmen aufweist und dazu ausgebildet ist, in einer Siebaufhahme der Druckvorrichtung angeordnet, mit einer Druckmasse befüllt und mit einem Rakel zur Durchführung eines Druckvorgangs beaufschlagt zu werden.

Weiterhin betrifft die Offenbarung ein Drucksystem mit wenigstens einer Druckvorrichtung zum Drucken dreidimensional geformter Strukturen, insbesondere auf Substraten, insbesondere Leiterplatten, Wafer, Solarzellen, Trägersubstraten, Drucktische, Trägerplatten, Sinterplatten oder dergleichen, wobei die Druckvorrichtung einen mit einem Rakel arbeitenden Druckkopf und eine dem Druckkopf zugeordnete Siebaufnahme zur Aufnahme zumindest einer Siebeinheit aufweist.

Siebeinheiten und Drucksysteme der eingangs genannten Art sind aus dem Stand der Technik bekannt. Um mittels einer Sieb-Druckvorrichtung einen Druckvorgang durchzuführen, wird auf ein Drucksieb, das eine Siebmaske aufweist, die der zu druckenden Struktur entspricht, eine Druckmasse aufgetragen, die mittels eines Rakels von dem Druckkopf durch das Sieb hindurch beispielsweise auf ein Trägersubstrat gepresst wird. Derartige Drucksysteme finden beispielsweise Einsatz bei der Herstellung von elektrischen Leiterbahnen auf Leiterplattensubtraten oder dergleichen. Grundsätzlich können derartige Druckvorrichtungen mit unterschiedlichen Materialien arbeiten und sind nicht auf ein Drucksieb und/oder ein Material beschränkt. Wenn jedoch mehrere Druckvorgänge hintereinander mit unterschiedlichen Materialien durchgeführt werden sollen, führt dies zu dem Problem, dass sowohl die Druckvorrichtung als auch das Drucksieb aufwendig gereinigt werden müssen, um zu vermeiden, dass sich die Materialien beim darauffolgenden Druckvorgang vermischen.

Aus der Offenlegungsschrift DE 103 44 022 A1 ist eine Druckvorrichtung bekannt, die einen Druckwerksrahmen mit einem Rakelhalter aufweist. In dem Druckwerksrahmen kann ein Drucksieb angeordnet werden.

Der Erfindung liegt somit die Aufgabe zugrunde, eine Siebeinheit zu schaffen, welche die Möglichkeit bietet, eine aufwendige Reinigung zu vermeiden und damit zeitnah die Druckvorrichtung umzurüsten für den Druck mit einem anderen Material.

Die der Erfindung zugrundeliegende Aufgabe wird durch eine Siebeinheit mit den Merkmalen des Anspruchs 1 gelöst. Diese hat den Vorteil, dass die Siebeinheit einen Materialwechsel in einer Druckvorrichtung besonders einfach macht, weil die Siebeinheit nicht nur austauschbar ist, sondern auch die für den Druckvorgang wesentlichen Elemente der Druckvorrichtung, die mit dem Material ebenfalls in Berührung kommen, mitzuführen, sodass mit der Siebeinheit der Druckvorrichtung nicht nur das Drucksieb, sondern auch das Werkzeug zum Durchführen des Druckvorgangs zuführbar ist. Erfindungsgemäß ist dazu in oder an dem Rahmen der Siebeinheit zumindest eine Halteeinrichtung für ein als Wechselrakel ausgebildetes Rakel angeordnet. Die Erfindung sieht also vor, dass an der Siebeinheit das Rakel für den Druckvorgang mitführbar ist oder mitgeführt wird. Durch die Halteeinrichtung ist das Rakel an der Siebeinheit sicher gehalten und mit der Siebeinheit mitführbar, sodass die Einheit aus Drucksieb und Rakel stets zusammen gehandhabt werden kann. Voraussetzung hierfür ist, dass das Rakel als Wechselrakel ausgebildet ist und somit an dem Druckkopf beziehungsweise der Rakeleinrichtung des Druckkopfs einfach austauschbar ist. Erfindungsgemäß bildet das Rakel einen Bestandteil der Siebeinheit.

Weiterhin ist bevorzugt vorgesehen, dass die Halteeinrichtung eine Rakelaufnahme aufweist, in welcher das Rakel anordenbar ist. Durch die Rakelaufnahme ist das Rakel sicher an dem Drucksieb mitführbar und insbesondere auch ausrichtbar, sodass ein einfaches Greifen des Rakels durch die Druckvorrichtung gewährleistet ist.

Erfindungsgemäß ist vorgesehen, dass das Rakel einen Halteabschnitt und einen Rakelabschnitt aufweist, wobei die Halteeinrichtung dazu ausgebildet ist, das Rakel nur an dem Halteabschnitt zu halten. Dadurch ist der Mechanismus, durch welchen das Rakel an dem Rahmen gehalten ist, lösgelöst von dem Rakelabschnitt selbst, sodass eine Verunreinigung des Mechanismus durch die Druckmasse sicher vermieden wird.

Erfindungsgemäß ist vorgesehen, dass die Halteeinrichtung eine Aussparung aufweist, in welcher der Rakelabschnitt berührungsfrei anordenbar ist. Durch das berührungsfreie Anordnen des Rakelabschnitts ist dieser belastungsfrei an dem Drucksieb anordenbar und mit diesem mitführbar. Darüber hinaus wird dadurch vermieden, dass an dem Rakel verbliebene Druckmasse mit dem Rahmen der Siebeinheit und/oder der Halteeinrichtung
in Berührung kommt und diese auf Dauer verschmutzt und die Funktion insbesondere der Halteeinrichtung auf Dauer beeinträchtigt. Weiterhin ist bevorzugt vorgesehen, dass die Aussparung in dem Rahmen als Vertiefung oder als Durchbruch ausgebildet ist. Hierdurch ist eine besonders kostengünstige Bereitstellung der Aussparung und eine einfache Halterung des Rakels an dem Rahmen gewährleistet.

Alternativ oder zusätzlich weist die Halteeinrichtung zumindest einen Permanentmagneten auf, der in oder an dem Rahmen angeordnet und dazu ausgebildet ist, mit dem Rakel, insbesondere mit dem Halteabschnitt des Rakels magnetisch zusammenzuwirken. Hierbei wird die Arretierung des Rakels somit durch Magnetkraft an dem Rahmen gewährleistet. Dies hat den Vorteil, dass an dem Rahmen keine Materialschwächungen und/oder Verformungen vorgenommen werden müssen, um das Rakel an dem Rahmen zu lagern. Weil die permanentmagnetische Halteeinrichtung nicht unbedingt für einen Benutzer ersichtlich ist, weist in diesem Fall der Rahmen bevorzugt eine oder mehrere Marker auf, die visuell erkennen lassen, an welcher Stelle das Rakel magnetisch an den Rahmen arretierbar ist. Zweckmäßigerweise sind die Markierungen dazu dem einen oder den mehreren Permanentmagneten zugeordnet.

Weiterhin ist bevorzugt vorgesehen, dass das Rakel einen Wechselanschluss für die Druckvorrichtung aufweist. Insbesondere an dem Halteabschnitt des Rakels ist der Wechselanschluss ausgebildet oder angeordnet, um einen einfachen Rakelwechsel an der Druckvorrichtung, insbesondere automatisiert, vorzunehmen.

Der Wechselanschluss weist dazu beispielsweise zumindest ein Rastmittel zum Verrasten des Rakels an dem Druckkopf der Druckvorrichtung auf. Der Wechselanschluss kann beispielsweise als Bajonettverschluss, Schraubverschluss, Steckverschluss oder Rastverschluss ausgebildet sein.

Das Drucksystem mit den Merkmalen des Anspruchs 6 zeichnet sich durch die erfindungsgemäße Siebeinheit aus, wobei der Druckkopf einen Wechselanschluss für das Rakel der Siebeinheit aufweist. Dadurch ist gewährleistet, dass die Druckvorrichtung das mit dem Drucksieb mitgeführte Rakel aufnehmen und für den Druckvorgang verwenden kann. Insbesondere in Kenntnis der Position der Halteeinrichtung an der Siebeinheit, ist es für die Druckvorrichtung ohne weiteres möglich, automatisiert die Position des Rakels anzufahren und dieses aus der Halteeinrichtung zu lösen, um einen Druckvorgang durchzuführen. Insbesondere ist der Wechselanschluss des Druckkopfs dazu ausgebildet, mit den Wechselanschluss des Rakels, wie er zuvor beschrieben wurde, zusammenzuwirken.

Weiterhin ist bevorzugt vorgesehen, dass der Druckkopf eine Einrichtung zum Entnehmen und Ablegen des Rakels aus der beziehungsweise in die Halteeinrichtung und zum Durchführen eines Druckvorgangs aufweist. Die Einrichtung weist dazu beispielsweise einen oder mehrere Greifer auf, die pneumatisch, magnetisch, hydraulisch oder elektromotorisch das Rakel an dem Halteabschnitt beziehungsweise dem Wechselanschluss greifen und bewegen.

Bevorzugt weist das Drucksystem eine Vielzahl der erfindungsgemäßen Siebeinheiten auf. Insbesondere ist für das jeweilige Druckmuster beziehungsweise die jeweilige Druckstruktur und das dazu zu verwendende Material eine eigene Siebeinheit vorhanden, um einen schnellen Siebaustausch und damit einen schnellen Betrieb der Druckvorrichtung zur Durchführung eines mehrlagigen, dreidimensionalen Druckvorgangs zu ermöglichen.

Weiterhin ist bevorzugt vorgesehen, dass das Drucksystem ein Siebmagazin aufweist, das mehrere Sieblager zur Aufnahme jeweils einer Siebeinheit aufweist, und dass die Siebeinheiten in dem Siebmagazin gelagert oder lagerbar sind. Das Siebmagazin hilft dabei, die Ordnung in den Drucksieben aufrecht zu erhalten und insbesondere diese beispielsweise in Abhängigkeit von Material- und/oder Druckstruktur zu sortieren.

Weiterhin ist bevorzugt vorgesehen, dass das Siebmagazin eine Konditionierungseinrichtung zum Einstellen oder Aufrechterhalten eines Klimas in dem Siebmagazin aufweist, durch welches ein Eintrocknen von auf einer Siebeinheit zurückgebliebener Druckmasse verhindert wird. Durch die Konditionierungseinrichtung wird erreicht, dass sichergestellt ist, dass Drucksiebe, die sich auch längere Zeit im Siebmagazin befinden und noch Reste von Druckmasse aufweisen, wiederverwendet werden können, ohne dass sie zuerst gereinigt und vollständig mit Druckmasse erneut befüllt werden müssen. Dadurch werden sowohl der Materialverbrauch reduziert als auch die Bearbeitungszeit verkürzt.

Weiterhin ist bevorzugt vorgesehen, dass das Drucksystem eine Transporteinrichtung aufweist, die dazu ausgebildet ist, eine ausgewählte Siebeinheit aus dem Siebmagazin zu entnehmen und in der Siebaufnahme der Druckvorrichtung anzuordnen und umgekehrt. Hierdurch ist ein automatischer Siebaustausch gewährleistet, der das Drucken dreidimensionaler Strukturen, insbesondere mit unterschiedlichen Materialien, weiter beschleunigt und vereinfacht.

Im Folgenden soll die Erfindung anhand der Zeichnung näher erläutert werden. Dazu zeigen
- Figur 1: ein vorteilhaftes Drucksystem in einer vereinfachten Seitenansicht und
- Figuren 2A und 2B: Ausführungsbeispiele einer vorteilhaften Siebeinheit für das Drucksystem in vereinfachten perspektivischen Darstellungen.

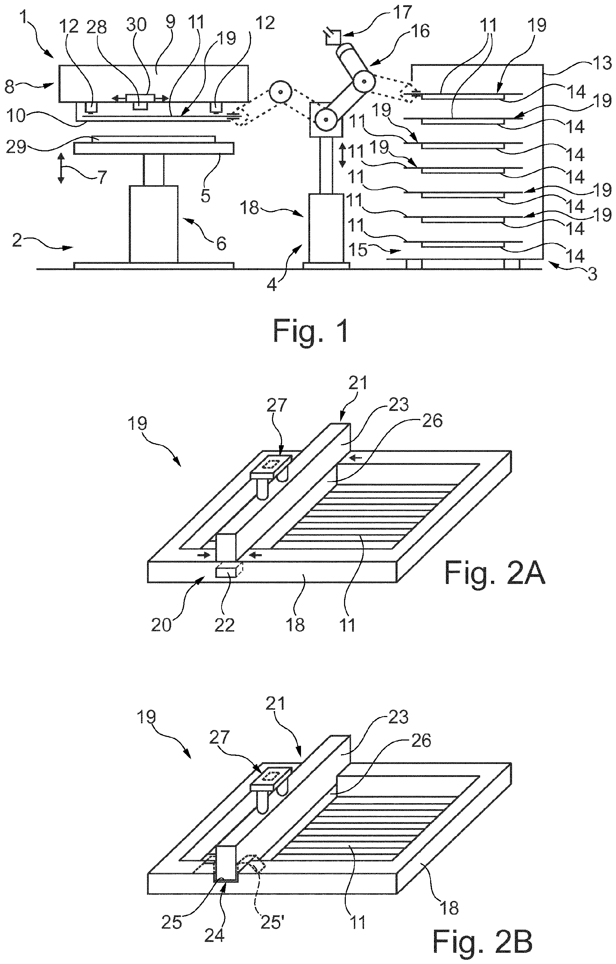

Figur 1 zeigt in einer vereinfachten Seitenansicht ein Drucksystem 1, das eine Druckvorrichtung 2, ein Siebmagazin 3 sowie eine Transporteinrichtung 4 aufweist.

Die Druckvorrichtung 2 weist einen Drucktisch 5 auf, der durch eine Hubvorrichtung 6 in der Höhe verstellbar ist, wie durch einen Doppelpfeil 7 angezeigt. Dem Drucktisch 5 zugeordnet ist ein Druckkopf 8, der eine Rakeleinrichtung 9 aufweist. Zusätzlich zu einem hier nicht näher dargestellten Rakel weist die Rakeleinrichtung 9 eine Siebaufnahme 10 auf, in welcher ein Drucksieb 11 anordenbar ist. Die Siebaufhahme 10 ist dazu beispielsweise als Steckaufnahme ausgebildet, in welche das Drucksieb 11 eingesteckt, insbesondere seitlich beziehungsweise horizontal eingeschoben werden kann, wie in Figur 1 gezeigt. Alternativ ist die Siebaufnahme 10 dazu ausgebildet, dass das Drucksieb 11 in diese eingelegt werden kann. Optional weist die Siebaufnahme 10 ansteuerbare Klemmelemente 12 auf, mittels welcher das Drucksieb 11 in der Siebaufnahme 10 festklemmbar ist, sodass bei einem Druckvorgang, bei welchem das Rakel der Rakeleinrichtung 9 über das Drucksieb 11 bewegt wird, die Ausrichtung und Position des Drucksiebs 11 sich nicht verändert.

Das Siebmagazin 3 weist ein Gehäuse 13 auf und ist vorliegend beabstandet zu der Druckvorrichtung 2 angeordnet. In dem Gehäuse 13 sind mehrere Sieblager 14 übereinanderliegend beziehungsweise übereinander gestapelt angeordnet. Die Sieblager 14 sind beispielsweise wie die Siebaufhahme 10 ausgebildet und weisen optional ebenfalls die Klemmelemente 12 auf. In jedem Sieblager 14 ist ein Drucksieb 11 anordenbar. Das Gehäuse 13 ist im Wesentlichen geschlossen ausgebildet, weist jedoch auf einer insbesondere der Druckvorrichtung 2 zugewandten Seite eine Entnahmeöffnung 15 auf, durch welche ein Drucksieb 11 in das Gehäuse 13 ein oder aus diesem herausgenommen werden kann.

Zum Bewegen der Drucksiebe 11 ist die Transporteinrichtung 4 ausgebildet. Diese weist gemäß dem vorliegenden Ausführungsbeispiel einen mehrgelenkigen Transportarm 16 auf, der an seinem freien Ende einen Greifer 17 trägt. Der Greifer 17 ist beispielsweise pneumatisch oder mechanisch arbeitend ausgebildet, um ein einzelnes Drucksieb 11 zu greifen. Die Transporteinrichtung 4 ist zwischen der Druckvorrichtung 2 und dem Siebmagazin 3 derart angeordnet, dass der Transportarm 16 sowohl ein der Entnahmeöffnung 15 zugeordnetes Drucksieb 11 als auch ein in der Siebaufhahme 10 abgelegtes Drucksieb 11 erreichen kann. Gemäß dem vorliegenden Ausführungsbeispiel erstreckt sich die Entnahmeöffnung 15 nahezu über die gesamte Höhe des Siebmagazins 3, wobei der Transportarm 16 derart ausgebildet ist, dass er jedes Sieblager 14 beziehungsweise das darin befindliche Drucksieb erreichen kann. Optional ist dazu die Transporteinrichtung 4 mit einer eigenen Hubvorrichtung 18 ausgestattet, um die Bewegungsfreiheit des Greifers 17 zu erhöhen. Zusammen mit dem Siebmagazin 3 bildet die Transporteinrichtung 4 ein Siebbereitstellungssystem für die Druckvorrichtung 2.

Die Funktion des vorteilhaften Drucksystems 1 gestaltet sich wie folgt. Für das Drucken dreidimensional geformter Strukturen wird die Transporteinrichtung 4 zunächst dazu angesteuert, ein bestimmtes Drucksieb 11 aus dem Siebmagazin 3 zu entnehmen und der Siebaufnahme 10 zuzuführen. Das Drucksieb 11 wird in der Siebaufnahme 10 mittels der Klemmmittel 12 arretiert. Anschließend wird das Drucksieb 11 mit einer Druckmasse, insbesondere Druckpaste, aus einem ausgewählten Material beaufschlagt und ein Rakel der Rakeleinrichtung 9 über das Drucksieb 11 geschoben, sodass die Druckmasse durch das Drucksieb 11 hindurch auf den Drucktisch aufgedruckt wird. Dabei ist es denkbar, dass die Druckmasse direkt auf den Drucktisch 5 aufgetragen wird, oder auf ein auf dem Drucktisch 5 angeordnetes Substrat 19, das beispielsweise als Trägersubstrat, oder auch als Leiterplatte, Wafer oder dergleichen ausgebildet sein kann. Das Drucksieb 11 weist dazu bereichsweise Sieböffnungen auf, welche der gewünschten ersten Schicht der zu druckenden Struktur entsprechen. Dabei können viele derartiger Strukturen in das Drucksieb 11 eingearbeitet sein, sodass auch mehreren Bauteile beziehungsweise Strukturelemente/Strukturen gleichzeitig einem Druckvorgang auf dem Substrat 19 und/oder dem Drucktisch 5 nebeneinanderliegend hergestellt werden können.

Nachdem die erste Drucklage erzeugt wurde, wird der Drucktisch 7 beispielsweise nach unten durch die Hubeinrichtung 6 verfahren und ein weiterer Druckvorgang durchgeführt, bei welchem das gleiche Drucksieb 11 genutzt wird, um eine weitere Drucklage zu erzeugen, welche die gleiche Struktur wie die erste Drucklage aufweist. Optional wird anstelle des gleichen Drucksiebs 11 eines der anderen Drucksiebe 11 verwendet. Dazu verbringt der Transportarm 16 das in der Siebaufnahme 10 befindliche Drucksieb 11 in das Siebmagazin 3, nämlich in ein dort freies Sieblager 14. Anschließend entnimmt der Transportarm 16 ein anderes Sieb 11 aus einem anderen Drucklager 14 und führt dieses der Siebaufnahme 10 der Druckvorrichtung 2 zu. Bei einem darauffolgenden Druckvorgang wird dann beispielsweise eine Drucklage erzeugt, welche sich in ihrer Gestalt von der vorherigen Drucklage unterscheidet. Durch dieses Prinzip können mehrere Drucklagen übereinander hergestellt werden, die sich voneinander unterscheiden, wodurch auch komplexe dreidimensionale Strukturen hergestellt werden können. Nach jedem erfolgten Druckvorgang wird der Drucktisch 5 ein Stück weit gesenkt oder alternativ wird der Druckkopf 9 ein Stück weit angehoben.

Jedes Drucksieb 11 ist von einem Siebrahmen 18 eingefasst, der sicherstellt, dass das Drucksieb 11 gespannt und transportierbar ist.

Figur 2A zeigt hierzu in einer vereinfachten perspektivischen Darstellung eine Siebeinheit 19 des Drucksystems, die den rechteckförmigen Siebrahmen 18, das von dem Siebrahmen 18 gehaltene Drucksieb 11 sowie ein Rakel 21 für die Rakeleinrichtung 9 der Druckvorrichtung 2 aufweist.

An dem Siebrahmen 18 ist außerdem eine Halteeinrichtung 20 zum Halten des Rakels 21 angeordnet. Die Halteeinrichtung 20 weist beispielsweise, wie in Figur 2A gezeigt, an jeweils einer Seite des Rahmens 18 einen Permanentmagneten 22 auf, der magnetisch mit einem Halteabschnitt 23 des Rakels 21 zusammenwirkt, um das Rakel 21 durch Magnetkraft an dem Siebrahmen 18 zu befestigen beziehungsweise zu arretieren. Dazu ist der Halteabschnitt 23 des Rakels 21 zweckmäßigerweise aus einem Material gefertigt, das mit dem Permanentmagneten 22 magnetisch zusammenwirkt. Der Halteabschnitt 23 erstreckt sich dabei über das Drucksieb 11 seitlich hinaus, sodass der Halteabschnitt 23 auf dem Siebrahmen 18 zum Liegen kommt und magnetisch daran gehalten werden kann, wie in Figur 2A gezeigt.

Figur 2B zeigt ein weiteres Ausführungsbeispiel der Siebeinheit 19, das sich von dem vorhergehenden Ausführungsbeispiel dadurch unterscheidet, dass die Halteeinrichtung 20 nicht oder nicht nur durch Magnetkraft bereitgestellt ist, sondern auch eine formschlüssige Halterung des Rakels 21 bietet. Dazu weist gemäß dem Ausführungsbeispiel in Figur 2B der Siebrahmen 18 eine Rakelaufnahme 24 auf, in welcher der Halteabschnitt 23 des Rakels 21 aufgenommen werden kann. Die Rakelaufhahme 24 kann dabei durch eine Aussparung 25 oder Vertiefung in dem Siebrahmen 18 direkt bereitgestellt sein, oder durch zwei beabstandet zueinander angeordnete Erhebungen 25' an der dem Rakel 21 zugewandten Oberseite des Siebrahmens 18, wie in Figur 2B durch gestrichelte Linien als weitere Option gezeigt.

In jedem Fall weist das Rakel 21 neben dem Halteabschnitt 23 einen Rakelabschnitt 26 auf, mit welchem das Drucksieb 11 bei einem Druckvorgang überstrichen beziehungsweise beaufschlagt wird, um die Druckpaste durch das Drucksieb 11 hindurch auf das Substrat 29 zu pressen.

Außerdem weist das Rakel 21 einen Wechselanschluss 27 auf, der mit einem Wechselanschluss 28 der Druckvorrichtung 2 beziehungsweise der Rakeleinrichtung 9 zusammenwirkt, um das Rakel 21 lösbar an der Rakeleinrichtung 9 zu befestigen. Dabei weist die Rakeleinrichtung 9 eine den Wechselanschluss 28 aufweisende Einrichtung 30 zum Greifen und Bewegen des Rakels 21 auf, wie in Figur 1 gezeigt. Bei dem Wechselanschluss 27 handelt es sich beispielsweise um ein Bajonettverschluss, Rastverschluss oder dergleichen, der eine lösbare Verbindung ermöglicht. Weil die Position der Halteeinrichtung 20 grundsätzlich bekannt ist, und insbesondere an jedem Siebrahmen 18 der vorhandenen Siebeinheiten 19 des Drucksystems 1 gleich ist, ist die Druckvorrichtung 2 einfach derart programmbierbar, dass zu Beginn eines Druckvorgangs die Rakeleinrichtung 9 zunächst mit dem Wechselanschluss 28 die Position des Rakels 21 anfährt, das Rakel 21 greift, indem die Wechselanschlüsse 27, 28 miteinander verbunden werden, und anschließend den Druckvorgang durchführt. Bei Beendigung des Druckvorgangs legt die Rakeleinrichtung 9 entsprechend das Rakel 21 an der bekannten Position der Halteeinrichtung 20 ab und die Siebeinheit 19, also das Drucksieb 11 zusammen mit dem Rakel 21, können aus der Druckvorrichtung 2 entnommen und beispielsweise zu dem Siebmagazin 3 zurückgeführt werden.

Durch das Vorhandensein mehrerer Siebeinheiten 19, die insbesondere unterschiedliche Drucksiebe 11 aufweisen, und mit unterschiedlichen Materialien vorbefüllt sind oder befüllt werden können, ist ein schneller Druck dreidimensional geformter Strukturen kostengünstig und ressourcensparend gewährleistet. Zweckmäßigerweise sind dazu die Drucksiebe 11 des Drucksystems 1 jeweils als Siebeinheit 19, wie sie vorstehend beschrieben wurde, ausgebildet, sodass die Siebeinheiten 19, die jeweils ein eigenes Rakel aufweisen, von der Transporteinrichtung 4 transportiert beziehungsweise der Druckvorrichtung 2 automatisiert zugeführt und in dem Siebmagazin 3, wie mit Bezug auf die Drucksiebe 11 beschrieben, zusammen mit dem jeweils zugehörigen Rakel 21 gelagert werden.

## Patentansprüche

1. Siebeinheit (19) für eine Druckvorrichtung (2) zum Drucken dreidimensional geformter Strukturen, insbesondere auf Substraten, Leiterplatten, Wafern, Solarzellen, Trägersubstraten, Drucktischen, Trägerplatten, Sinterplatten oder dergleichen, wobei die Siebeinheit (19) einen zumindest ein Drucksieb (11) tragenden Rahmen (18) aufweist und dazu ausgebildet ist, in einer Siebaufnahme (10) der Druckvorrichtung (2) angeordnet, mit einer Druckmasse befüllt und mit einem Rakel (21) zur Durchführung eines Druckvorgangs beaufschlagt zu werden, **dadurch gekennzeichnet, dass** die Siebeinheit (19) das Rakel (21) und in oder an dem Rahmen (18) zumindest eine Halteeinrichtung (20) für das als Wechselrakel ausgebildete Rakel (21) aufweist, dass das Rakel (21) einen Halteabschnitt (23) und einen Rakelabschnitt (26) aufweist, wobei die Halteeinrichtung (20) dazu ausgebildet ist, das Rakel (21) nur an dem Halteabschnitt (23) zu halten, und dass die Halteeinrichtung (20) eine Aussparung (25) aufweist, in welcher der Rakelabschnitt (26) berührungsfrei anordenbar ist.

2. Siebeinheit nach Anspruch 1, **dadurch gekennzeichnet, dass** die Halteeinrichtung (20) eine Rakelaufnahme (24) aufweist, in welcher das Rakel (21) anordenbar ist.

3. Siebeinheit nach einem der vorhergehenden Ansprüche, **dadurch gekennzeichnet, dass** die Aussparung (25) in dem Rahmen (18) als Vertiefung oder als Durchbruch ausgebildet ist.

4. Siebeinheit nach einem der vorhergehenden Ansprüche, **dadurch gekennzeichnet, dass** das Rakel (21) einen Wechselanschluss (27) für die Druckvorrichtung (2) aufweist.

5. Siebeinheit nach einem der vorhergehenden Ansprüche, **dadurch gekennzeichnet, dass** der Wechselanschluss (27) zumindest ein Rastmittel zum Verrasten des Rakels an einem Druckkopf der Druckvorrichtung aufweist.

6. Drucksystem (1) mit wenigstens einer Druckvorrichtung (2) zum Drucken dreidimensional geformter Strukturen, insbesondere auf Substraten, Leiterplatten, Wafern, Solarzellen, Trägersubstraten, Drucktischen, Trägerplatten, Sinterplatten oder dergleichen, wobei die Druckvorrichtung (2) einen Druckkopf (8), mit einer Rakeleinrichtung (9) aufweist, der ein Rakel (21) zuordenbar ist und die eine Siebaufnahme (10) zur Aufnahme zumindest einer Siebeinheit (19) aufweist, **dadurch gekennzeichnet, dass** die Siebeinheit (19) nach einem der Ansprüche 1 bis 5 ausgebildet ist, und ein Rakel (21) mit einem Wechselanschluss (27) für die Rakeleinrichtung (9) aufweist.

7. Drucksystem nach Anspruch 6, **dadurch gekennzeichnet, dass** die Rakeleinrichtung (9) eine Einrichtung (30) zum Entnehmen und Ablegen des Rakels aus der beziehungsweise in die Halteeinrichtung (20) und zum Durchführen eines Druckvorgangs aufweist.

8. Drucksystem nach einem der vorhergehenden Ansprüche 6 oder 7, **dadurch gekennzeichnet, dass** eine Vielzahl der Siebeinheiten (19) vorhanden sind.

9. Drucksystem nach Anspruch 8, **dadurch gekennzeichnet, dass** ein Siebmagazin (3) vorhanden ist, das mehrere Sieblager (14) zur Aufnahme jeweils einer Siebeinheit (19) aufweist, und dass die Siebeinheiten (19) in dem Siebmagazin (3) gelagert sind.

10. Drucksystem nach Anspruch 9, **dadurch gekennzeichnet, dass** das Siebmagazin (3) eine Konditionierungseinrichtung (23) zum Einstellen oder Aufrechterhalten eines Klimas in dem Siebmagazin (3) aufweist, durch welches ein Eintrocknen von auf einer Siebeinheit (19) zurückgebliebener Druckmasse verhindert ist.

11. Drucksystem nach einem der vorhergehenden Ansprüche 9 oder 10, **dadurch gekennzeichnet, dass** eine Transporteinrichtung (4) vorhanden ist, die dazu ausgebildet ist, eine ausgewählte Siebeinheit (19) aus dem Siebmagazin (3) zu entnehmen und in der Siebaufnahme (10) der Druckvorrichtung (2) anzuordnen und umgekehrt.

## Claims

1. Screen unit (19) for a printing device (2) for printing three-dimensionally-shaped structures - in particular, on substrates, printed circuit boards, wafers, solar cells, carrier substrates, printing tables, carrier plates, sintering plates or the like - wherein the screen unit (19) has a frame (18) holding at least one printing screen (11) and is designed to be accommodated in a screen receptacle (10) of the printing device (2), to be filled with a printing compound, and to be subjected to the action of a squeegee (21) for carrying out a printing process, **characterized in that** the screen unit (19) has the squeegee (21) and, in or on the frame (18), at least one holding device (20) for the squeegee (21), which is in the form of an exchangeable squeegee, that the squeegee (21) has a holding section (23) and a squeegee section (26), wherein the holding device (20) is designed to hold the squeegee (21) only at the holding section (23), and that the holding device (20) has a recess (25) in which the squeegee section (26) can be arranged without contact.

2. Screen unit according to claim 1, **characterized in that** the holding device (20) has a squeegee receptacle (24) in which the squeegee (21) can be arranged.

3. Screen unit according to one of the preceding claims, **characterized in that** the recess (25) in the frame (18) is designed as a depression or as a perforation.

4. Screen unit according to one of the preceding claims, **characterized in that** the squeegee (21) has an exchangeable connector (27) for the printing device (2).

5. Screen unit according to one of the preceding claims, **characterized in that** the exchangeable connector (27) has at least one locking means for locking the squeegee to a printing head of the printing device.

6. Printing system (1) with at least one printing device (2) for printing three-dimensionally-shaped structures - in particular, on substrates, printed circuit boards, wafers, solar cells, carrier substrates, printing tables, carrier plates, sintered plates or the like - wherein the printing device (2) has a printing head (8), with a squeegee device (9) to which a squeegee (21) can be assigned, and which has a screen receptacle (10) for receiving at least one screen unit (19), **characterized in that** the screen unit (19) is designed according to one of claims 1 through 5, and has a squeegee (21) with an exchangeable connector (27) for the squeegee device (9).

7. Printing system according to claim 6, **characterized in that** the squeegee device (9) has a device (30) for removing and placing the squeegee from or into the holding device (20) and for carrying out a printing operation.

8. Printing system according to one of the claims 6 or 7, **characterized in that** a plurality of screen units (19) are present.

9. Printing system according to claim 8, **characterized in that** a screen magazine (3) is present, which has several screen stores (14) for receiving one screen unit (19) each, and that the screen units (19) are stored in the screen magazine (3).

10. Printing system according to claim 9, **characterized in that** the screen magazine (3) has a conditioning device (23) for setting or maintaining a climate in the screen magazine (3), by which the drying out of printing compound remaining on a screen unit (19) is prevented.

11. Printing system according to one of the claims 9 or 10, **characterized in that** a transport device (4) is present, which is designed to remove a selected screen unit (19) from the screen magazine (3) and to arrange it in the screen receptacle (10) of the printing device (2), and vice versa.

## Revendications

1. Unité de tamisage (19) pour un dispositif d'impression (2) pour l'impression de structures formées en trois dimensions, en particulier sur des substrats, des circuits imprimés, des plaquettes, des cellules solaires, des substrats de support, des tables d'impression, des plaques de support, des plaques frittées ou similaires, l'unité de tamisage (19) présentant un cadre (18) portant au moins un tamis d'impression (11) et étant conçue pour être disposée dans un réceptacle de tamisage (10) du dispositif d'impression (2), pour être remplie d'une masse d'impression et pour être alimentée avec une racle (21) pour la réalisation d'un processus d'impression, **caractérisé en ce que** l'unité de tamisage (19) présente la racle (21) et, dans ou sur le cadre (18), au moins un dispositif de maintien (20) pour la racle (21) conçue comme une racle interchangeable, **en ce que** la racle (21) présente une section de maintien (23) et une section de racle (26), le dispositif de maintien (20) étant conçu pour maintenir la racle (21) uniquement sur la section de maintien (23), et **en ce que** le dispositif de maintien (20) présente un évidement (25) dans lequel la section de racle (26) peut être disposée sans contact.

2. Unité de tamisage selon la revendication 1, **caractérisée en ce que** le dispositif de maintien (20) présente un réceptacle de racle (24) dans lequel la racle (21) peut être disposée.

3. Unité de tamisage selon l'une des revendications précédentes, **caractérisée en ce que** l'évidement (25) dans le cadre (18) est réalisé sous la forme d'un creux ou d'une ouverture.

4. Unité de tamisage selon l'une des revendications précédentes, **caractérisée en ce que** la racle (21) présente un raccord interchangeable (27) pour le dispositif d'impression (2).

5. Unité de tamisage selon l'une des revendications précédentes, **caractérisée en ce que** le raccord interchangeable (27) présente au moins un moyen d'encliquetage pour enclencher la racle sur une tête d'impression du dispositif d'impression.

6. Système d'impression (1) avec au moins un dispositif d'impression (2) pour l'impression de structures formées en trois dimensions, en particulier sur des substrats, des circuits imprimés, des plaquettes, des cellules solaires, des substrats de support, des tables d'impression, des plaques de support, des plaques frittées ou similaires, le dispositif d'impression (2) présentant une tête d'impression (8), avec un dispositif de racle (9), auquel une racle (21) peut être assignée et qui présente un réceptacle de tamisage (10) pour recevoir au moins une unité de tamisage (19), **caractérisé en ce que** l'unité de tamisage (19) est réalisée selon l'une des revendications 1 à 5, et présente une racle (21) avec un raccord interchangeable (27) pour le dispositif de racle (9).

7. Système d'impression selon la revendication 6, **caractérisé en ce que** le dispositif de racle (9) présente un dispositif (30) pour retirer et déposer la racle du dispositif ou bien dans le dispositif de maintien (20) et pour effectuer une procédée d'impression.

8. Système d'impression selon l'une des revendications précédentes 6 ou 7, **caractérisé en ce qu'**il comporte une pluralité d'unités de tamisage (19).

9. Système d'impression selon la revendication 8, **caractérisé en ce qu'**il existe un magasin de tamisage (3) qui présente plusieurs paliers de tamisage (14) destinés à recevoir chacun une unité de tamisage (19), et **en ce que** les unités de tamisage (19) sont logées dans le magasin de tamisage (3).

10. Système d'impression selon la revendication 9, **caractérisé en ce que** le magasin de tamisage (3) présente un dispositif de conditionnement (23) pour régler ou maintenir un climat dans le magasin de tamisage (3), grâce auquel un séchage de la masse d'impression restée sur une unité de tamisage (19) est empêché.

11. Système d'impression selon l'une des revendications précédentes 9 ou 10, **caractérisé en ce qu'**il existe un dispositif de transport (4) qui est conçu pour retirer une unité de tamisage (19) sélectionnée du magasin de tamisage (3) et la placer dans le réceptacle de tamisage (10) du dispositif d'impression (2) et inversement.
